# EUROPEAN PATENT APPLICATION

(11) **EP 2 736 240 A1**
(43) Date of publication of application: **28.05.2014**
(21) Application number: 12193862.5
(22) Date of filing: 22.11.2012
(51) Int. Cl.: H04M 3/56

(54) **Telephonic device for setting up a teleconference based on a received invitation**

(71) Applicant: Mitel Networks Corporation, Ottawa, ON K2K 2W7 (CA)
(72) Inventor: Yeung, Michael, Nepean, Ontario K2G 6R6 (CA); Quan, Tom, Ottawa, Ontario K2H 9L7 (CA)
(74) Representative: McDougall, James

(57) **Abstract**

A telephonic device, such as a mobile phone, configured to:
receive a teleconference invitation (possible formats: email, text or voice message) comprising embedded authentication information (300);
receive a user input accepting the teleconference invitation (304); user chooses to participate in teleconference or not;
extract the authentication information from the invitation (308);
cause the authentication information to be stored (310); and
automatically utilise the authentication information to complete a teleconference connection process (318).

## Description

### Field of the Invention

The present invention relates to an apparatus configured to receive a teleconference invitation comprising embedded authentication information.

### Background of the Invention

Many commercial and social interactions are now conducted as teleconferences in which some or all of the participants are remote from one another. This may regularly be the case for someone whose work requires them to travel during their working day. Such a user may use a mobile phone to call in to a teleconference, and may have to do so while travelling. The user may be inconvenienced by having to perform a typical login process to join a teleconference. This is particularly the case if the user is driving at the scheduled time of the teleconference.

Session IDs and associated authentication information may be sent to a user as part of a teleconference invitation. The user may need to note this information down or store it as part of a meeting reminder in their calendar. At the time of the teleconference, the user must retrieve and enter this information. As well as being an inconvenient process, the level of security of such a system is low since the ID and associated authentication information are shown in the plain text of the teleconference invitation. Thus a person with unintentional access to the meeting invitation could copy this information and gain access to the teleconference.

### Summary of the Invention

A first aspect of the invention provides an apparatus configured to:
receive a teleconference invitation comprising embedded authentication information;
receive a user input accepting the teleconference invitation;
extract the authentication information from the invitation;
cause the authentication information to be stored; and
automatically utilise the authentication information to complete a teleconference connection process.

The apparatus may be further configured to display an option to join the teleconference. The option to join the teleconference may be displayed at a scheduled time and date of the teleconference. The option to join the teleconference may be displayed at a predetermined time before a scheduled time of the teleconference. The apparatus may be configured, when a user input selecting the option to join the teleconference is received, to complete the teleconference connection process without further user input.

The apparatus may comprise a memory storing an authentication agent and a calendar application, wherein the authentication agent is configured to:
cause the authentication information to be extracted from the invitation;
cause information associated with the teleconference to be stored in the calendar application;
cause the authentication information to be stored in the device; and
automatically utilise the authentication information to cause a teleconference connection process to be completed.

Causing a teleconference connection process to be completed may comprise the authentication agent dialling an extracted session ID and communicating one or more extracted passcodes to a teleconference host server. The authentication agent may be configured to use the information associated with the teleconference to cause an option to join the teleconference to be generated and displayed on a display unit of the apparatus.

The authentication agent may be configured to utilise the authentication information to cause a teleconference connection process to be completed when an incoming call from a teleconference host server is answered at the apparatus.

The authentication information may be associated with the teleconference. The authentication information may be associated with the user. The authentication information is generated as part of a user login process.

The apparatus may be configured to prevent the authentication information from being displayed on a display unit of the apparatus.

A second aspect of the invention provides a server configured to:
schedule a teleconference session;
create a teleconference invitation for the teleconference session, the invitation having a plain text part and an embedded authentication information part;
receive an invitation acceptance message from a user device, the invitation acceptance message having authentication information;
compare the authentication information in the received invitation acceptance message with the authentication information part in the teleconference invitation; and
authenticate the user device for participation in the teleconference session when the authentication information in the received invitation acceptance message corresponds with the authentication information part in the teleconference invitation.

The server may be further configured to:
call the user device at a scheduled time and date of the teleconference session; and
automatically place the user device into the teleconference session if the call is answered.

The server may be further configured to distribute identity information and/or presence information for the user device to other, third party user devices. The third party devices may be additional attendees of the teleconference session. The server may be configured to provide the user device with identity information and/or presence information for some or all of the third party user devices.

A third aspect of the invention provides a method comprising:
receiving a teleconference invitation comprising embedded authentication information;
receiving a user input accepting the teleconference invitation;
extracting the authentication information from the invitation;
causing the authentication information to be stored; and
automatically utilising the authentication information to complete a teleconference connection process.

A fourth aspect of the invention provides a non-transitory computer-readable storage medium having stored thereon computer-readable code, which, when executed by computing apparatus, causes the computing apparatus to perform the method of the third aspect of the invention.

A fifth aspect of the invention provides an apparatus comprising:
means for receiving a teleconference invitation comprising embedded authentication information;
means for receiving a user input accepting the teleconference invitation;
means for extracting the authentication information from the invitation;
means for causing the authentication information to be stored; and
means for automatically utilising the authentication information to complete a teleconference connection process.

A sixth aspect of the invention provides an apparatus comprising at least one processor and at least one memory including computer program code, the at least one memory and the computer program code configured to, with the at least one processor, cause the apparatus at least to:
receive a teleconference invitation comprising embedded authentication information;
receive a user input accepting the teleconference invitation;
extract the authentication information from the invitation;
cause the authentication information to be stored; and
automatically utilise the authentication information to complete a teleconference connection process.

A seventh aspect of the invention provides a server comprising at least one processor and at least one memory including computer program code, the at least one memory and the computer program code configured to, with the at least one processor, cause the server at least to:
schedule a teleconference session;
create a teleconference invitation for the teleconference session, the invitation having a plain text part and an embedded authentication information part;
receive an invitation acceptance message from a user device, the invitation acceptance message having authentication information;
compare the authentication information in the received invitation acceptance message with the authentication information part in the teleconference invitation; and
authenticate the user device for participation in the teleconference session when the authentication information in the received invitation acceptance message corresponds with the authentication information part in the teleconference invitation.

### Brief Description of the Drawings

Embodiments will now be described, by way of example only, with reference to the accompanying drawings, in which:
Figures 1 and 2 are schematic illustrations of systems suitable for implementing the invention;
Figure 3 is a flow chart illustrating exemplary operation of the system;
Figure 4 is a timeline illustrating signals exchanged between, and steps performed at, various components of the system; and
Figure 5 is a timeline illustrating signals exchanged between, and steps performed at, various components of the system.

### Detailed Description

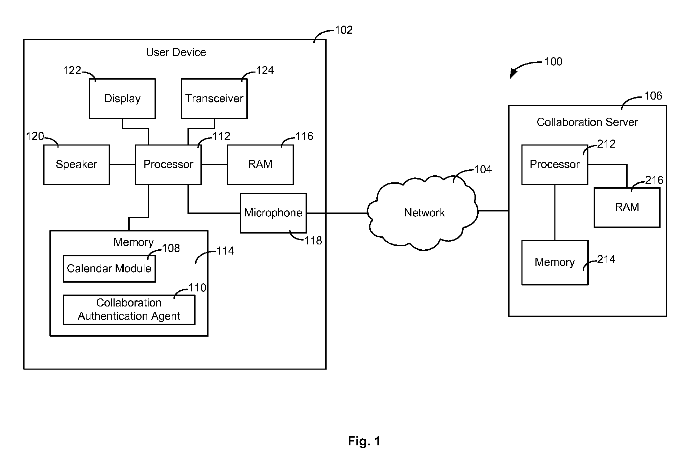

Referring firstly to Figure 1, a system 100 in which the invention may be implemented is shown. This Figure is highly schematic and omits some intermediate links and device components. The system comprises a user device 102 (also referred to as apparatus), a network 104 and a server 106. The network 104 may be any suitable type or combination of telecommunications networks, for example a public switched telephone network (PSTN), a wireless or cellphone network, a private branch exchange (PBX) or a data network such as a wide area network (WAN).

The user device 102 may be a telecommunications apparatus such as a mobile phone, a desk phone, a car phone, a PDA or tablet computer or other computing apparatus. The user device 102 may comprise a processor 112 (also referred to as a processing apparatus 112 or processing device 112), RAM 116 and a memory 114 (also referred to as a memory apparatus 114 or memory device 114). The memory 114 may store an operating system and program modules. The memory 114 may be a volatile memory such as a hard disk or a non-volatile memory such as a flash drive. The device 102 may comprise more than one memory device 114.

The device 102 may also comprise other components such as a microphone 118, speaker(s) 120, a display 122, a transceiver 124 and an antenna. The processor 112 may control operation of the other components of the device 102. The other components may be connected to the processor 112 directly, or via interfaces or a system bus. The processor may operate under instruction of an operating system stored in the memory 114 and may utilise RAM 116 to perform computations. The device may comprise more than one processor device 112 and more than one memory device 114. If the device 102 is a mobile communication device, the transceiver 124 (and an associated antenna) are used to communicate by transmitting and receiving radio waves. The device 102 may be a phone, or may be used as a phone. The microphone 118 picks up a user's speech and the speaker 120 plays voice data which is received.

The display 122 may be an LCD, plasma or e-ink display. The display 122 may be a touch screen display such as a resistive or capacitive touch screen. The processor 112 may be configured to receive signals as a result of user inputs at the touch screen display 122. Alternatively, the device 102 may not have a display.

The memory 114 of the user device 102 may store a calendar module 108 and a collaboration authentication agent 110. The calendar module 108 and collaboration authentication agent 110 may be implemented as software (computer program code) or as a hardware circuit. The calendar module 108 may be a program storing information on a user's work and/or private schedule. The calendar module 108 may control the display of reminders and playing of alarms to notify a user of upcoming events in their schedule. A user of the device 102 may also maintain an online calendar or may have other devices on which a calendar application runs.

The collaboration authentication agent 110 may be a program configured to run on the user device 102 which controls the transmission and receipt of information relating to a "collaboration session". The collaboration session may be a type of teleconference. The term teleconference is used herein to mean any kind of communication session in which at least one of the participants is physically separated so as to prevent direct communication and may involve the transfer of voice, video and/or data in other formats. The collaboration authentication agent 110 may be configured to receive incoming teleconference invitations, to extract information such as the date, time, host, location and/or subject of the teleconference and to extract a session ID and authentication information from the invitation. The collaboration authentication agent 110 may cause the extracted information to be stored in the calendar module 108. In response to a request from the collaboration server 106, or in response to an instruction from the calendar module 108, the collaboration authentication agent 110 may also send "join notifications" to the collaboration server 106. The join notifications facilitate the user device 102 joining a teleconference session and comprise a session ID and authentication information. The collaboration authentication agent 110 may be a self-contained computer program. Alternatively, the collaboration authentication agent 110 may be a software modification or add-on to the calendar module 108. The collaboration authentication agent 110 may be installed on the device 102 after factory programming of the device by modifying an existing software module, such as the calendar module 108. The user's online calendar may replace the calendar module 108 in some embodiments. The collaboration authentication agent 110 may be programmed to use the transceiver 124 of the device 102 or another means of communication to access the user's online calendar in order to store the extracted information and later to retrieve that information. Alternatively, the extracted information may be stored in both the calendar module 108 and a user's online calendar. The user's online calendar and the calendar module 108 may be synchronised.

The user device 102 and server 106 communicate with one another through the network 104 using any suitable communication protocols. For example, the user device 102 may be a mobile telephone which communicates directly with base stations of a cellular mobile telephone network connected to the PSTN. The collaboration server 106 may communicate with a PBX using TCP/IP which may in turn be connected to the PSTN, or the collaboration server 106 may be configured to directly communicate over the PSTN. In this way, voice, video and data communication between a mobile user device 102 and the collaboration server 106 is achieved.

The server 106 may comprise a processor 212 (also referred to as a processing apparatus 212 or processing device 212), RAM 216 and a memory 214 (also referred to as a memory apparatus 214 or memory device 214). The memory 214 may store an operating system and program modules. The memory 214 may be a volatile memory such as a hard disk or a non-volatile memory such as a flash drive. The server 106 may comprise more than one memory device 214.

The server 106 may also comprise other components such as a communications interface (not shown). The processor 212 may control operation of the other components of the server 106. The other components may be connected to the processor 212 directly, or via interfaces or a system bus. The processor 212 may operate under instruction of an operating system stored in the memory 214 and may utilise RAM 216 to perform computations. The server 106 may comprise more than one processor device 212 and more than one memory device 214.

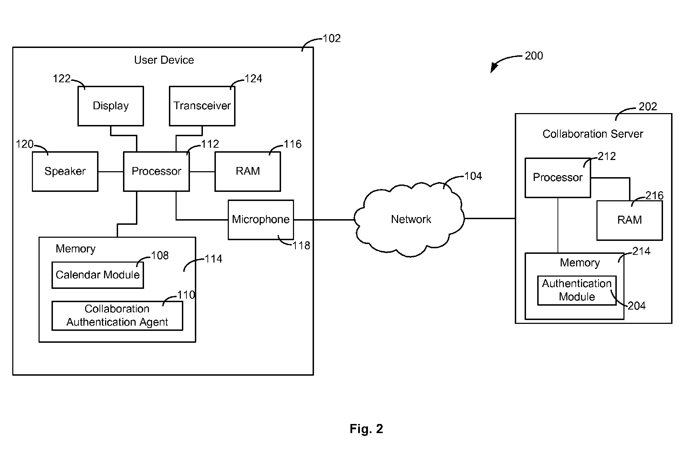

The system 100 may comprise a plurality of user devices 102. Typically, each attendee of a teleconference will have their own user device 102. The collaboration server 106 may be configured to host a teleconference session in which a plurality of user devices 102 may communicate together through the server 106. The collaboration server 106 may be a proprietary server, such as a PBX. Figure 2 illustrates an alternative system 200 comprising a user device 102 and network 104 as previously described and a collaboration server 202 running an authentication module 204. The collaboration server 202 may be an existing telecommunications server, such as a PBX configured to host teleconference sessions. The collaboration server 202 comprises a processor 212, RAM 216 and memory 214 as previously described.. The authentication module 204 may be a program configured to run on the collaboration server 202, to embed authentication information such as session IDs and passcodes into teleconference invitations and to authenticate user devices 102 for participation in teleconference sessions. The authentication module 204 may be computer program code stored in the memory 214 of the collaboration server 202. The authentication module 204 may be part of the factory programming of the collaboration server 202 or may be installed as an application at a later time.

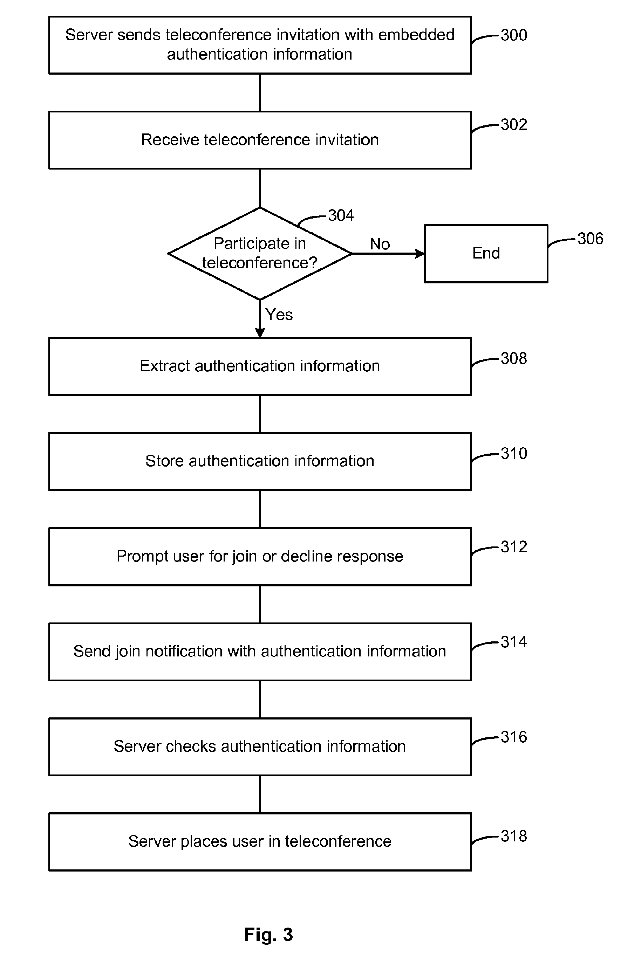

Referring now to Figure 3, a flowchart is shown illustrating exemplary operation of the system 100. At step 300 the server 106, 202 sends a teleconference invitation to one or more user devices 102. The server 106, 202 embeds "authentication information" in the invitation. The authentication information may comprise any combination of a session ID, an IP or MAC address, a phone number, a login name, a passcode or password and a data token. The authentication information might also be referred to as contact information, security information or encoded information. The authentication information may be generated by the server 106, 202 or otherwise retrieved from a memory within or accessible to the server 106, 202. The authentication information may also comprise an "access level" or "privilege level", based on the identity of the user to whom the invitation is sent. This access level may be used to differentiate between e.g. internal employees and external vendors/partners. Certain features provided by the teleconference host server 106, 202, such as a private chat function or content sharing, may be limited to those users having a higher access level. The authentication information is embedded in the data structure of the invitation in such a way that it is not visible in the plain text of the invitation. Thus the authentication information is effectively hidden from the recipient of the invitation. The server 106, 202 may use Dual-tone multi-frequency (DTMF) signaling to communicate the teleconference invitation.

At step 302 a user device 102 receives the teleconference invitation. The device 102 may receive the invitation as a push notification. The notification may be in the form of an email, a text message, a voice message or any other suitable format. The collaboration authentication agent 110 running on the user device 102 handles the receipt of the teleconference invitations.

At step 304, it is determined if a user device 102 will participate in the teleconference. In response to receiving the teleconference invitation, the collaboration authentication agent 110 and/or the calendar module 108 may cause a message to be displayed on a display device 122 of the user device 102. The message may give details of the teleconference, such as the date, time, subject and originator (host) of the teleconference as well as displaying options for the user to accept or decline participation in the teleconference. The user may provide an input selecting one of these options. For example, a user of the device 102 may press a hardware key, interact with a touch sensitive display device or provide a voice input to select one of the options.

If a user input selecting to decline participation in the teleconference is received at step 304, then the process ends at step 306. Details of the teleconference are not added to the user's calendar. Optionally, before the process ends, the user device 102 may send a decline response to the invitation back to the server 106, 202 in order to notify the teleconference host of the user's intentions. If a user input selecting to accept participation in the teleconference is received at step 304, then the process continues to step 308. Optionally, before (or concurrently with) proceeding to step 308, the user device 102 may send an accept response to the invitation back to the server 106, 202 in order to notify the teleconference host of the user's intentions. Details of the scheduled time and subject of the teleconference may be stored in the calendar module 108.

At step 308 the authentication information is extracted from the teleconference invitation by the collaboration authentication agent 110. The teleconference invitation may have a predetermined data format which is known to the collaboration authentication agent 110, allowing the extraction to occur automatically and without user input. At step 310, the extracted authentication information is stored in the device 102. The authentication information may be stored in the calendar module 108 or in another area of memory. Alternatively, or in addition, the extracted authentication information may be stored in a remote memory, such as on a user's desk computer hosting a calendar application or on a remote server hosting a user's online calendar. This enables the authentication process to be performed on any device running the collaboration authentication agent 110 and which is able to access the user's online calendar. Thus the user may access the teleconference from an unfamiliar device, such as a shared terminal.

The authentication information may be stored in such a way that it cannot be viewed directly by a user of the device 102. As the authentication information is not displayed when the teleconference invitation is received or when the authentication information is extracted and stored, the security of the system is increased. A third party who gained access to the meeting invitation, for example by viewing the user's calendar, would not be able to see the authentication information and thus would not be able to gain access to the teleconference session.

Step 312 is an optional step occurring in some embodiments in which the user is prompted for a join or decline response at the scheduled time of the teleconference. This prompt may be generated by the server 106, 202 which hosts the teleconference and sent to the user device 102 in the same manner as the teleconference invitation. Alternatively, the prompt may be generated by the collaboration authentication agent 110 in conjunction with the calendar module 108 based on the teleconference information stored in the calendar module 108. Step 312 may allow a user to decide, at the time of a teleconference, whether they still wish to participate. The prompt may be in the form of a pop-up window on a display 122 of the user device 102 and provides a convenient way for the user to join the teleconference session as only a single input is required. In some alternative embodiments, step 312 is not performed and no prompt is displayed, but the user device 102 may be called by the server 106, 202 hosting the teleconference. The user may answer the call to be placed into the teleconference, or ignore the call to decline participation. In either case, a convenient means for the user to join a teleconference is provided. If the user is travelling, this convenient joining mechanism prevents interruption to their journey. For example, if the user is driving at the scheduled time of the teleconference, an alert or call requiring only a single key press or voice command prevents the need to interrupt the journey in order to join the teleconference.

After receiving a join response at step 312 (if performed), the process continues to step 314 in which the user device 102 sends a join notification containing the authentication information previously extracted from the teleconference invitation to the server 106, 202. The join notification may be generated by the collaboration authentication agent 110, which may access the calendar module 108 or user's online calendar to retrieve the authentication information. The process of creating and sending the join notification containing the authentication information occurs automatically. Therefore, the user is not required to enter any of the authentication information manually. Sending the join notification may comprise the user device 102 using Dual-tone multi-frequency (DTMF) signaling to communicate the session ID and passcode. Alternatively, the collaboration authentication agent 110 and server 106, 202 may use a signalling interface such as Session Initiation Protocol (SIP) or a proprietary interface to exchange information.

At step 316 the server 106, 202 checks the authentication information received from the user device 102 in the join notification against the authentication information for the teleconference session. If the received information is correct, the server 106, 202 places the user device 102 into the teleconference session at step 318. If the received information is not correct, the server 106, 202 may notify the user device 102 and the user device 102 is not placed into the teleconference. Step 318 may occur immediately after step 316 or after a delay. For example, the user device 102 may be configured to prompt the user for a join response (step 312) and to send a join notification to the server 106, 202 (step 314) at a time prior to the teleconference session. The server 106, 202 may also check the received authentication information and authenticate the user device 102 for participation in the session (step 316) prior to the scheduled time of the teleconference session.

Prior to or at the time of the teleconference, the server 106, 202 may distribute identity information and presence information for the user device 102 to other invitees/attendees of the teleconference session. The server 106, 202 may provide the user device 102 with identity and presence information about some or all of the other invitees/attendees of the teleconference session.

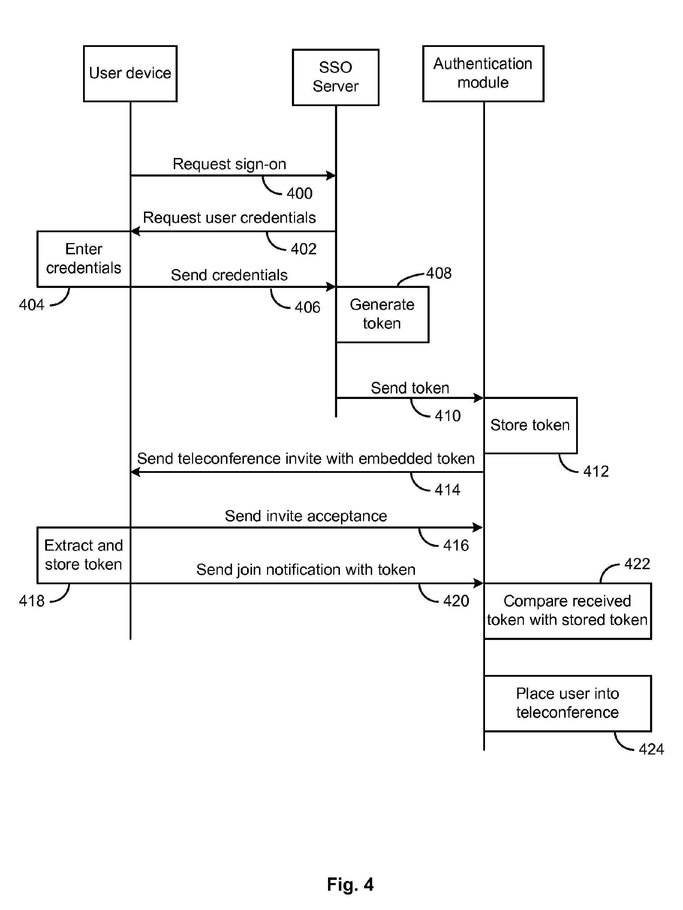

Figure 4 shows a timeline illustrating signals exchanged between, and steps performed at, the user device 102, an authentication server and authentication module 204 according to some embodiments of the invention. The arrows represent signals exchanged between the components and the boxes represent operations performed at a component. The operation illustrated by Figure 4 utilises a single sign on (SSO) process to authenticate the user device 102. This SSO process may be based on an open standard for authorisation, such as Security Assertion Markup Language (SAML) or OAuth. The authentication server may be referred to as a SSO server.

At step 400 the user device 102 sends a signal to the SSO server requesting sign-on. In response, the SSO server sends a signal requesting user credentials at step 402. The sending of these signals may be part of an initial login procedure which a user performs in order to log in to the user device 102, or to log in to a user account. For example, a user may log in to their mobile phone in order to gain access to their enterprise profile and device settings. These device settings may include the user's access or privilege levels as determined by their identification. Thus the access levels which an internal user (such as an employee) usually has when using their device 102 are imported into the teleconference session. The user may either directly begin a login procedure, or may have requested access to content requiring them to be logged in, resulting in the login request.

At step 404 the credentials are entered into the user device 102 by the user. The credentials may take the form of a username and password, for example. At step 406 the user device 102 sends the credentials to the SSO server. The SSO server receives the credentials and logs the user in. At step 408, the SSO server then uses the user credentials to create an authentication token. The authentication token may comprise a copy of the user credentials, information derived form the user credentials, or a passcode generated by an algorithm. The authentication token may be unique to the user who has logged in, or the token may be the same for all users who log in via the SSO server.

At step 410 the SSO server sends the token to the authentication module 204. This may be done automatically or in response to a request from the authentication module 204. The authentication module 204 may be a program running on the SSO server, in which case the signal is internal to the SSO server. Alternatively, the authentication module 204 may be part of a teleconference host server 202 which is separate from the SSO server. At step 412, the authentication module 204 receives the token and stores it in memory.

At some later time, a teleconference session is scheduled. A teleconference host server, being either a sever 202 on which the authentication module 204 is running, or the SSO server is designated as the host server. The authentication module 204 creates and sends a teleconference invitation to the user device 102 in step 414. The authentication module 204 embeds the previously received authentication token in the invitation. The authentication token is embedded in the invitation in such a way that it is not visible in the plain text of the invitation. Step 414 is therefore very similar to step 300 of Figure 3.

Step 416 is an optional step in which the user device 102 sends a signal to the authentication module 204 that the teleconference invitation has been accepted. As previously described, a message may be displayed on the user device 102 giving the user options to accept or reject the invitation.

At step 418, the user device 102 extracts and stores the embedded token in the same way as described in steps 308 and 310 of Figure 3. In step 420, at the time of the teleconference, the user device 102 sends a join notification to the authentication module 204. The join notification contains the authentication token previously extracted from the teleconference invitation. The join notification may be generated by the collaboration authentication agent 110 running on the user device in the same way as described in step 314 of Figure 3. The user is not required to provide any additional inputs to cause the authentication token to be transmitted. In some embodiments, a message may be displayed on the user device 102 at the time of the teleconference, but prior to step 420, prompting the user to join the teleconference, or to decline participation.

At step 422, the authentication module 204 compares the received authentication token with the stored token. If the tokens are the same (or are corresponding), the user device 102 is placed into the teleconference at step 424. The teleconference may then proceed in the normal way.

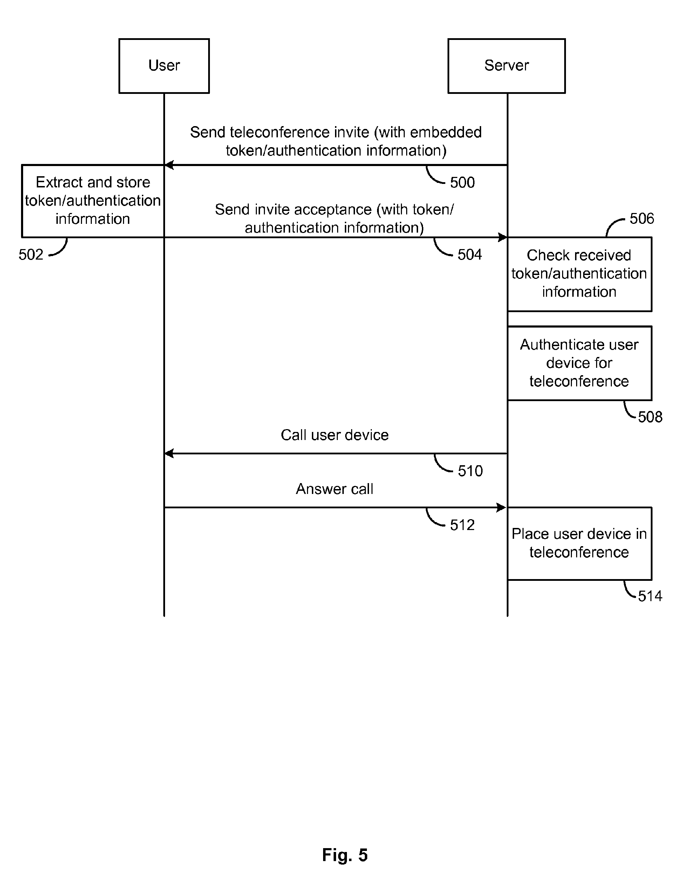

Figure 5 shows a timeline illustrating signals exchanged between, and steps performed at, the user device 102 and server 106, 202 according to some further embodiments of the invention. The operation illustrated by Figure 5 uses a call-back process to place the user device 102 in the teleconference session.

At step 500 the server 106, 202 sends a teleconference invitation to the user device 102. The server 106, 202 embeds authentication information or an authentication token in the invitation in the same way as previously described with reference to Figures 3 and 4. The authentication information/token is embedded in the invitation in such a way that it is not visible in the plain text of the invitation. As previously described, the collaboration authentication agent 110 and/or the calendar module 108 may then cause a message to be displayed on a display device of the user device 102. The message may give details of the teleconference, such as the date, time, subject and originator of the teleconference as well as displaying an option for the user to accept or decline participation in the teleconference. The user may provide an input selecting one of these options.

When the user selects the option to accept participation in the teleconference, the user device 102, at step 502, extracts and stores the embedded authentication information/token in the same way as described in steps 308 and 310 of Figure 3. Information relating to the teleconference is also stored in the calendar module 108. This information may be used for the purpose of generating reminders.

At step 504, the user device 102 sends an invite acceptance to the server 106, 202. The user device sends the authentication information/token with this invite acceptance. At step 506, the server 106, 202 receives the invite acceptance and checks the authentication information/token. If the authentication information/token is the same as (or corresponds to) that sent by the server 106, 202, then the user device 102 is authenticated for participation in the teleconference at step 508. Step 508 may comprise adding the ID of the user device 102 to a list of teleconference participants.

At the scheduled time of the teleconference, the server 106, 202 creates the teleconference session. At step 510, the server 106, 202 calls the user device 102 and any other user devices which have been authenticated for participation in the teleconference. A message may appear of the display 122 of the user device 102 when called by the server 106, 202. The message may be based on the caller line identity (CLI) of the server 106, 202. The calendar module 108 may be programmed to display some or all of the information associated with the teleconference when the user device 102 is called by the server 106, 202. Thus, the context of the incoming call is clear to the user.

If the user decides that they no longer wish to participate in the teleconference, then they can ignore or cancel the incoming call. If the user does wish to participate, at step 512 the user answers the call. At step 514, the server 106, 202 detects that the user device 102 has answered the call and places the device 102 into the teleconference. The teleconference may then proceed in the normal way.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as defacto equivalents of one another, but are to be considered as separate and autonomous representations of the present invention.

Furthermore, the described features, structures, or characteristics may be combined in any suitable manner in one or more embodiments. In the forgoing description, numerous specific details are provided, such as examples of communications systems, protocols and signals etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except by the claims.

## Claims

1. Apparatus configured to:
receive a teleconference invitation comprising embedded authentication information;
receive a user input accepting the teleconference invitation;
extract the authentication information from the invitation;
cause the authentication information to be stored; and
automatically utilise the authentication information to complete a teleconference connection process.

2. Apparatus according to claim 1, wherein the apparatus is further configured to display an option to join the teleconference.

3. Apparatus according to claim 2, wherein the option to join the teleconference is displayed at a scheduled time and date of the teleconference.

4. Apparatus according to claim 2, wherein the option to join the teleconference is displayed at a predetermined time before a scheduled time of the teleconference.

5. Apparatus according to any of claims 2 to 4, wherein the apparatus is configured, when a user input selecting the option to join the teleconference is received, to complete the teleconference connection process without further user input.

6. Apparatus according to any preceding claim, wherein the apparatus comprises a memory storing an authentication agent and a calendar application, wherein the authentication agent is configured to:
cause the authentication information to be extracted from the invitation;
cause information associated with the teleconference to be stored in the calendar application;
cause the authentication information to be stored in the device; and
automatically utilise the authentication information to cause a teleconference connection process to be completed.

7. Apparatus according to claim 6, wherein causing a teleconference connection process to be completed comprises the authentication agent dialling an extracted session ID and communicating one or more extracted passcodes to a teleconference host server.

8. Apparatus according to claim 6 or claim 7, wherein the authentication agent is configured to use the information associated with the teleconference to cause an option to join the teleconference to be generated and displayed on a display unit of the apparatus.

9. Apparatus according to claim 6 when dependent on claim 1, wherein the authentication agent is configured to utilise the authentication information to cause a teleconference connection process to be completed when an incoming call from a teleconference host server is answered at the apparatus.

10. Apparatus according to any preceding claim, wherein the authentication information is associated with the teleconference.

11. Apparatus according to any of claims 1 to 9, wherein the authentication information is associated with the user.

12. Apparatus according to claim 11, wherein the authentication information is generated as part of a user login process.

13. Apparatus according to any preceding claim, wherein the apparatus is configured to prevent the authentication information from being displayed on a display unit of the apparatus.

14. A server configured to:
schedule a teleconference session;
create a teleconference invitation for the teleconference session, the invitation having a plain text part and an embedded authentication information part;
receive an invitation acceptance message from a user device, the invitation acceptance message having authentication information;
compare the authentication information in the received invitation acceptance message with the authentication information part in the teleconference invitation; and
authenticate the user device for participation in the teleconference session when the authentication information in the received invitation acceptance message corresponds with the authentication information part in the teleconference invitation.

15. A server according to claim 14, the server further configured to:
call the user device at a scheduled time and date of the teleconference session; and
automatically place the user device into the teleconference session if the call is answered.
